# EUROPEAN PATENT SPECIFICATION

(11) **EP 2 732 058 B1**
(45) Date of publication and mention of the grant of the patent: **13.06.2018**
(21) Application number: 12738087.1
(22) Date of filing: 15.07.2012
(51) Int. Cl.: C21D 9/60, B21D 21/00, C23C 2/02, C23C 2/06, C25D 5/36, C21D 1/26, C21D 8/04, C21D 9/573

(54) **APPARATUS FOR PRODUCING ANNEALED STEELS AND PROCESS FOR PRODUCING SAID STEELS**
VORRICHTUNG ZUR HERSTELLUNG VON GEGLÜHTEN STÄHLEN UND VERFAHREN ZUR HERSTELLUNG DIESER STÄHLE
APPAREIL DE PRODUCTION D'ACIERS RECUITS ET PROCÉDÉ DE PRODUCTION DE CES ACIERS

(30) Priority: 15.07.2011 EP 11174195
(43) Date of publication of application: 21.05.2014
(73) Proprietor: Tata Steel IJmuiden BV, 1951 JZ Velsen-Noord (NL); Tata Steel Nederland Technology B.V., 1951 JZ Velsen-Noord (NL)
(72) Inventor: BERKHOUT, Basjan, NL-1970 CA IJmuiden (NL); HANLON, David, Neal, NL-1970 CA IJmuiden (NL); CELOTTO, Steven, NL-1970 CA IJmuiden (NL); PAULUSSEN, Gerardus, Jacobus, NL-1970 CA IJmuiden (NL); VERBERNE, Jacques, Pierre, Jean, NL-1970 CA IJmuiden (NL)
(74) Representative: Bodin, Andre
(86) International application number: PCT/EP2012/063860
(87) International publication number: WO 2013/010968

(56) References cited:
- EP-A1- 0 688 884
- JP-A- 2000 063 959
- US-A- 5 785 772

## Description

This invention related to an apparatus for producing annealed steels and to a process for producing said steels.

Contemporary production processes at most steel manufactures are focussed on high throughputs. High throughputs help to keep the cost price down, which is very important for commodity products like steel. However, the focus on low cost has an important drawback. High volume production lines have inflexible processes and are unsuitable for production of high added-value niche products with process conditions deviating from the commodity products. The requirement for high throughput imposes strict boundary conditions on the annealing cycles possible. Because of this, new high strength steel (HSS) products need to be designed with strict limitations and are therefore always a compromise. It is difficult to run small size batches on these lines and in order to make a range of different products the chemistry needs to be adjusted to the process instead of the other way around. This has resulted in a large variety of chemistries that are being used for the different high strength steels currently produced and those under development.

Although alloy design is the most powerful tool available to product developers the limitations imposed by customer specifications and in-house makability requirements (e.g. weldability, galvanisability, surface condition, mill loads etc) present a serious obstacle to further improvement of existing products through alloying alone. Furthermore, these same limitations imposed on chemistry, when taken together with the relatively restricted variation in annealing schedule which may be achieved over conventional high volume lines, represent hard obstacles to commercialisation of the most promising metallurgical strategies for the next generation of ultra high strength, high ductility steels. In short, current high strength steel developments are reaching the acceptable limits of alloy addition and the next generation of advanced high strength steel may not be achievable without resorting to alloy contents which are unacceptably high in the context of current processing practice and capabilities.

Current HSS grades are often produced over conventional hot-dip galvanising (HDG) lines with capacities of the order of several hundred thousand tonnes per annum. Advanced HSS (AHSS) strip is produced at such comparatively low volumes (up to several tens of thousands of tonnes per annum) that, in order to utilise such lines to their full capacity, it is necessary to accommodate a product mix comprising both AHSS and conventional HSS/low carbon steels. AHSS are multiphase steels which contain phases like martensite, bainite and retained austenite in quantities sufficient to produce unique mechanical properties. Compared to conventional high strength steels, AHSS exhibit higher strength values or a superior combination of high strength with good formability (Bleck & Phiu-on, HSLA Steels 2005, Sanya (China)). This inevitably requires that the designed annealing capabilities, of even those lines earmarked for HSS production, are a compromise across the wide ranging requirements for production of a highly varied product mix. In order to deliver to specifications with sub-optimal and inflexible process alloy designers are forced to do more with chemistry. From a metallurgical standpoint conventional HDG lines present several key technological barriers to the production of truly optimised AHSS substrates which are both inherent to the nature of high capacity lines and to the hot-dip galvanising process itself:
1). Low cooling capacity / arrested cooling: Current lines employ comparatively slow cooling and in all cases cooling is arrested at an overage/zinc bath temperature.
2). Fixed Overaging Duration: Current lines all incorporate a cooling arrest either in the form of an extended overage or a zinc bath dwell.
3). Fixed Overaging Temperature: In conventional lines the overage temperature is effectively imposed by the temperature of the Zinc bath.
4). Restricted Top Temperature: In conventional lines the maximum top temperature may be limited by the installation and/or line speed requirements.

Traditionally large volumes of relatively simple products were key to an economical operation of the large scale production facilities in the metal industry.

EP0688884-A1 discloses such a large scale production facility for annealing and hot dip galvanising a metal strip incorporating an induction furnace which allows producing an initial temperature peak at the beginning of the thermal cycle to accelerate the recrystallisation using a heating zone consisting of an induction heating to the peak temperature and a soaking zone (Z2) second with a cooling zone (Z1) in between.

With an increasing demand for the production of niche products at low volumes there is a need for more flexible production lines which are able to produce these low volume products economically. Currently such flexible lines are not available.

It is an object of this invention to provide an apparatus for producing annealed steels which will allow the production of high strength steels with simpler chemistries.

It is also an object of this invention to provide an apparatus for producing annealed steels that allows to run small batch sizes against relatively low costs.

It is also an object of this invention to provide a process for producing annealed steels using the said apparatus.

It is also an object of this invention to provide a process after the main annealing cycle that gives the option of applying additional local heat treatments.

One or more of the objects are reached with an apparatus for producing annealed steels comprising:
a. an uncoiler for uncoiling steel strip material
b. a heating zone comprising:
   i. a heating step comprising a first heating unit comprising of radiant tube burners or an induction furnace for heating the steel strip to a temperature of between 400 to 600°C and a second heating unit comprising one or more transversal induction furnaces for further heating the steel strip to an annealing temperature of between 500°C up to about 1000°C;
   ii. a soaking step for soaking the steel strip for a period of at most 120 seconds;
   iii. a cooling step comprising a slow cooling zone, a fast cooling zone and a third cooling zone, wherein the slow cooling zone is for cooling the steel strip from the annealing temperature to the fast cooling start temperature and wherein the fast cooling zone is for quickly cooling the steel strip from the fast cooling start temperature to a cooling stop temperature of about 300°C and wherein the third cooling zone is for cooling the steel strip from the second cooling stop temperature to a temperature of between ambient temperature and 100°C;
c. an optional reheating zone;
d. an optional tailor annealing zone for local heat treating one or more zones areas in the longitudinal direction of the strip;
e. a final cooling zone;
f. a coating zone comprising an electrolytic step
g. a coiler for coiling the annealed strip material.

Preferable embodiments are provided in the dependent claims.

The apparatus according to the invention allows the development and production of (relatively) low-volume, high-value products instead of low-value, high-volume products. The highly flexible continuous annealing and galvanising line is extremely useful because it allows the production of AHSS and UHSS steels with simpler chemistries and gives the opportunity to run small batch sizes against relatively low (running) costs. The apparatus according to the invention allows the production of AHSS and UHSS steels with a flexibility of the heat treatments and thus in different properties over the length of the strip.

A constraint of conventional production lines for the continuous processing of strip is that the heating and cooling is applied uniformly over the whole width of the strip. One reason for this is to achieve uniformity in mechanical properties. However, it is often the case that different mechanical properties are required at different locations in the product for its manufacture (e.g. formability as in bendability) or for its application (e.g. high strength for energy absorption). Different mechanical properties can be achieved through different heat-treatment cycles or post heat treatment after the main annealing cycle. Therefore, it would also be advantageous to incorporate not just flexibility in the temperature/time profiles of a production line, but also allow the option of spatial flexibility in heat treating the strip with multiple heat treatment zones parallel to the longitudinal direction of the strip. The differences in heat treatment may be differences in overageing or tempering temperatures after a main annealing cycle that may include a deep quench. The apparatus according to the invention allows the production of AHSS and UHSS steels with a spatial flexibility of the heat treatments and thus in different properties over the width of the strip. The latter local heat treatment in a tailor annealing zone produces Tailor Annealed Strip (TAS).

The apparatus according to the invention provides the following new processing capabilities:
1). High top temperatures to enable full austenitisation;
2). Rapid quenching to a range of temperatures including low (sub Ms) temperatures;
3). Re-heating to an overageing isotherm;
4). Control over both overageing temperature and duration;
5). Option of heat treating zones parallel to the strip length having different temperature-time cycles or an additional post heat treatment using a tailor annealing zone.

In particular UHSS substrates in many cases require full-austenitisation (high top temperatures) followed by rapid cooling to a low quench temperature and subsequent isothermal holding often at a temperature substantially higher than the quench temperature.

For DP steels and other such partially martensitic grades a fast quenching capability is desirable for the formation of martensite. This reduces or eliminates the need of additions of alloying elements to suppress unwanted transformations and ensure sufficient hardenability. Moreover, additions of hardenability elements such as C, Mn, Cr and Mo may have significant implications for cost and for applications performance, in particular weldabilty.

Within the family of HSS overageing requirements vary widely. For dual phase steels it is desirable to minimise the duration of overageing/zinc bath dwell. In contrast, for TRIP or TRIP-assisted steels a controlled overage is necessary to ensure the desired degree of austenite stabilisation and in turn the desired mechanical properties. The apparatus accommodates these varying requirements.

In the case of both DP and TRIP Assisted steels optimisation of substrate properties allows active control of the overageing temperature and temperatures lower or higher than that of the zinc pot may be employed.

The unique features of the apparatus are the capability to apply an almost endless variety of annealing curves and the possibility to switch quickly between production of different products. Both properties are enabled by the use of special technology that allows flexibility in heating and cooling sections of the furnace and a low heat latency of the furnace as a whole. The furnace is therefore the most important part of the line.

The heating zone of the line comprises a heating step, a soaking step and a cooling step. This heating step comprises a first heating section that will heat the product to an intermediate temperature. This first heating section is followed by a second heating section that is able to heat the material to a temperature of around 1000°C or a lower temperature depending on the requirements. The intermediate temperature is preferably between 400 and 600°C, and more preferably between 450 and 550°C. A suitable intermediate temperature is about 500°C.

The first heating section preferably consists of a Radiant Tube Furnace (RTF). Alternatively an induction furnace could be used, but the RTF generally provide a more uniform temperature profile over the width at these relatively low temperatures.

The second section preferably comprises one or more, but preferably at least two induction heating sections in order to give the line its heating flexibility. Most steel grades benefit from initial fast heating in the temperature range between 500 and 750-800 °C. Preferably this is enabled by a fast transverse flux (TFX) induction furnace following base temperature heating up to 500 °C in the first heating part. The top temperature between 850 and 1000 °C can be obtained by a second TFX induction furnace. Because of the paramagnetic properties of some of the materials (austenitic steels) transversal induction is needed. The second TFX induction furnace is used for final heating from 800 °C to about 1000 °C. All ferrous materials become paramagnetic in this temperature range, so transversal induction is needed. RTF cannot be used to heat to the top temperature because of the large thermal latency in the cycle temperatures as a result of extensive heat accumulation in the RTF equipment itself and the slower overall heating rate achievable with RTF. This would adversely affect the flexibility of the apparatus in terms of rapid switches between annealing cycles.

The heating step is followed by a soaking step that is relevant for a number of materials. It can soak materials at a given temperature for periods depending on the line speed. The preferable maximum soaking time is about 120 seconds, more preferably 60 seconds.

After soaking, the material will be cooled in the cooling step, preferably by three subsequent cooling sections: a slow cooling section, followed by a fast cooling section and finally a third cooling section that will be active when materials need to be cooled to temperatures around 100°C before entering the reheating zone.

Besides flexible heating also flexible cooling is needed to allow for maximum control in the creation of special microstructures containing a mixture of austenite, ferrite and martensite. The cooling part, which follows after the soaking part, comprises one or more cooling sections to achieve the cooling of the strip after soaking. In an embodiment this cooling part comprises a slow cooling section, a fast cooling section and a third cooling section. The slow cooling section is used to cool the strip from the soaking temperature to the fast cooling start temperature, which is usually just above the temperature where the austenite would start to transform (Ar3). In the fast cooling section, the strip is cooled from the temperature just above Ar3 to a temperature of about 300°C. The third cooling section would further cool the strip to a temperature below the temperature where no further transformation takes place, i.e. about 100°C. The fast and third cooling section may be separate sections, or one integrated section with the ability of controlling the cooling stop temperature and the cooling rate. The cooling rate in the fast cooling is preferably at least 50°C/s.

In the reheating zone the strip may be subjected to an overageing step or an annealing step. In order to reach the overageing temperature in a fast and flexible manner, another induction furnace is installed. The reheating zone of the furnace can be used as an overageing section or optionally, it can be used to apply a uniform or local heat treatment. The latter local heat treatment produces Tailor Annealed Strip (TAS). In TAS material, mechanical properties can be tailored according to the specific requirements of the part. At locations where more formability is needed this can be achieved by local heat treatment of the strip in the line, usually resulting in desired variations of the mechanical properties over the width of the strip. The products this TAS-option will enable are coils of strip of coated or uncoated HSS with one or more zones parallel to the rolling direction. These zones are preferably at least 50mm wide. The properties of the TAS-treated zones will be dependent on the applied temperature cycle but will in general result in an enhanced (local) formability which can facilitate the use of HSS/UHSS for complex part geometries. After the overaging, the uniform annealing, or the TAS treatment, the strip will be cooled to about between 150 and 250°C in a fourth cooling section before leaving the protective atmosphere. Finally the strip will be cooled with air to about 50 to 100°C in a fifth cooling section. Preferably the fourth cooling section cools the strip to about between 150 and 250°C, preferably about 200°C, preferably using HNx and/or the fifth cooling section cools the strip to about 50 to 100°C, preferably about 80°C, preferably by using air cooling.

The reheating to an overageing temperature of preferably between 350 and 450°C preferably takes place by means of a longitudinal flux induction (LFX) because of the flexibility it provides. As the relevant steels are all magnetic at the overageing temperatures there is no need to use a TFX-furnace, although it could be used instead of an LFX. For the tailor annealing zone a TFX-unit is needed as the temperatures involved of preferably between 750 and 850°C involve paramagnetic materials. The overageing time depends on the line speed and the length of the furnace, but it is generally preferably limited to 180s.

The galvanisation is performed by electrolytic coating in an electrolytic coating part. Electro-galvanising was chosen instead of hot dip galvanising. This was done in order to be able to make the annealing process completely independent of the galvanising process and to be able to achieve an excellent coating quality even at lines speeds which are low in comparison to conventional HDG lines. An activation/pickling and/or cleaning section is preferably used just before the an electrolytic coating part. This reduces surface related problems to a minimum and allows the use of a larger variety of alloying elements.

It is preferable that annealing and coating steps are separated such that coating requirements (such as line speed and strip temperature) can be met without consequence for the development of the substrate microstructure or imposition of severe alloying restrictions. Beside these advantages there is the obvious advantage that current high capacity lines to produce large volumes of consistent commodities are relieved of the production of these difficult niche-products. According to a second aspect, the invention is also embodied in a process using the apparatus according to the invention.

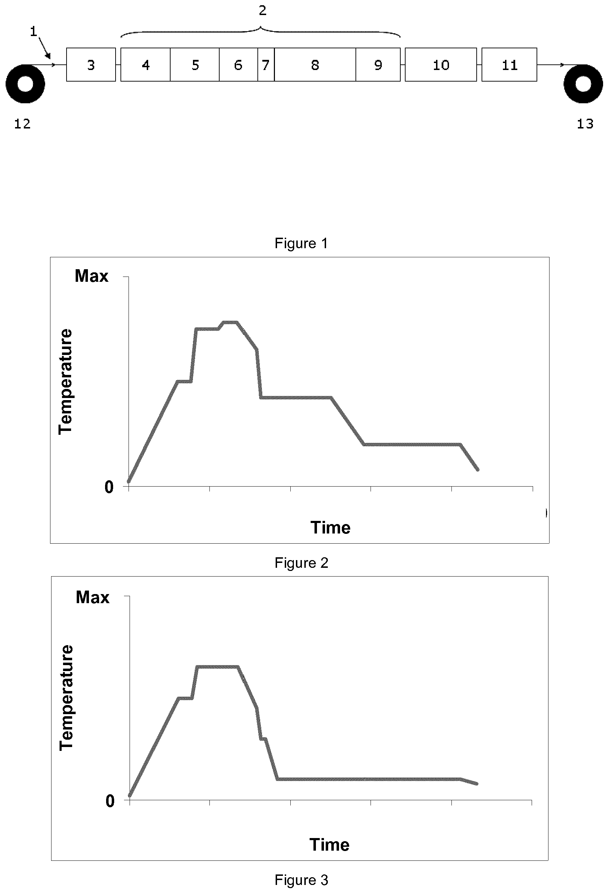

By means of a non-limiting example, a schematic drawing of an apparatus in accordance with the invention is presented in figure 1.

In figure 1 the reference numbers refer to the following:
1. strip material
2. heating zone
3. entry zone
4. radiant tube furnace section for the heating step
5. TFX-section for the soaking step
6. cooling section for the cooling step
7. LFX reheating zone
8. overageing or TAS-zone
9. final cooling zone
10. coating zone
11. exit zone
12. uncoiler
13. coiler

The entry zone may e.g. comprise one or more of rinsing equipment, drying equipment, buffer means (such as looping tower). The exit zone may e.g. comprise one or more of surface inspection, oiling equipment, cutting equipment or buffer means.

By means of non-limiting examples the flexibility of the apparatus according to figure 1 is demonstrated by means of figure 2 to 6 wherein in figure 2 the thermal curve for a 600 MPa AHSS is presented comprising ferrite, bainite, martensite and retained austenite. Figure 3 shows the curve for a recovery annealed steel, figure 4 for a steel comprising bainitic ferrite and martensite, and figure 5 for a tempered martensite.

Figure 2: A fast heating rate in the temperature range 500 - 750°C is employed because fast heating through into the heating transformation range is beneficial since it influences the size and distribution of the intercritical austenite and thus, in turn, of the second phase in the final microstructure. After the RTF furnace, the material is heated to ∼750°C. Subsequently the strip goes through the 2nd fast heating to the soaking section at an intercritical temperature typically in the range 780-850°C for. After soaking for ∼30 seconds, the strip is first slowly cooled and then fast cooled to an overageing temperature of ∼420°C. This temperature is chosen to promote the formation of bainite leading to the enrichment of carbon in austenite and thus the retention of metastable austenite in the final microstructure. Martensite is formed in the final cool followed by cooling to ambient temperature. An interruption of the final quench at 200°C or lower is permissible.

Figure 3: Heat treatment of 10-60s at 600-700°C where the heating and cooling rates are not critical to induce recovery in a cold-rolled high strength steel to allow for an increased elongation at the expense of some of the work-hardening.

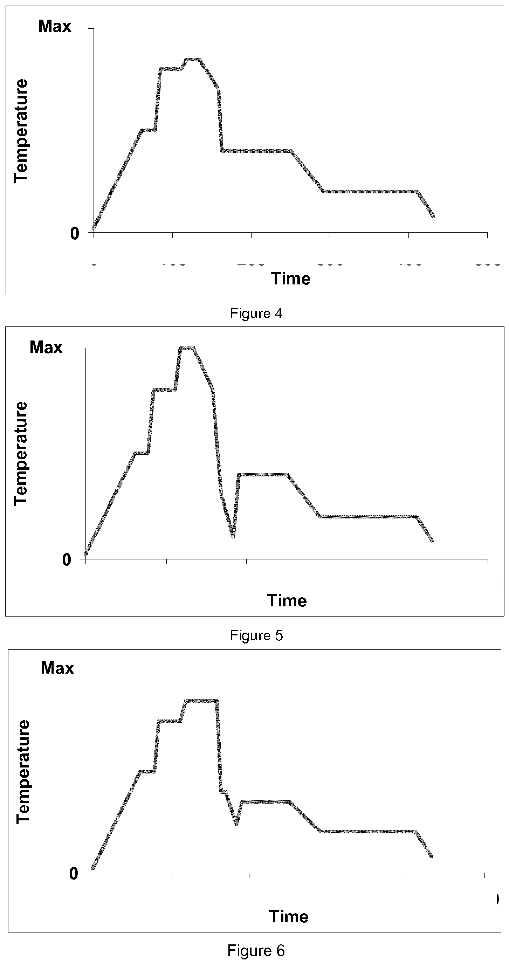

Figure 4: After the RTF furnace, the material is heated to ∼750°C, and after the 2nd fast heating the strip will have a temperature > Ac3. After full austenitizing during the soak at ∼850°C for ∼30 seconds, the strip is slowly cooled but the temperature should remain above 700°C at the end of the slow cool section. The fast cooling will decrease the strip temperature to < 400°C. In the overageing section the austenite decomposes virtually completely to bainitic ferrite such that no martensite will be formed in the final cooling.

Figure 5: First the material must be fully austenitic at temperature dependent on the C and Mn content, but typically above 820°C, followed by relatively fast cooling of at least 80°C/s to below a temperature of at least 200°C to fully transform into martensite. Light tempering to improve bendability and hole-expansion can be achieved by re-heating up to about 400-500°C for 10-60s. Higher temperature or longer tempering to improve formability at some expense to strength is achieved by heat treating at 600-750°C for 30-60s. Heating and cooling rates for tempering are not critical.

Figure 6: The strip is heated and austenitized in the intercritical region meaning that the soaking temperature is in the range 830-860°C. The volume fraction of intercritical ferrite is controlled by this top temperature, which in its turn determines the hardenability of the austenite prior to cooling. After the soak, the strip is cooled slowly to ∼700°C, and subsequently the strip goes through the fast cooling section to arrive at temperature near Ms (∼ 350°C). For this product the 3rd cooling section is important to cool the strip to ∼250°C. A moderate cooling rate is sufficient in this section because the formation of martensite in this temperature range is not time dependent but simply controlled by the undercooling below Ms. After cooling the strip is heated by means of induction to enter the overageing section at a temperature of 350-450°C. During the isotherm for ∼70 seconds (1) the as-formed martensite is tempered, (2) the austenite may become more stable due to carbon partitioning and (3) some carbide-free bainite may be formed which may also stabilise the austenite. For this product it is aimed to create very stable austenite, which means that no martensite will be formed in the final cooling.

## Claims

1. Apparatus for producing annealed steels comprising:
a. an uncoiler (12) for uncoiling steel strip material (1)
b. a heating zone (2) comprising:
i. a heating section comprising:
A. a first heating unit (4) comprising of radiant tube burners or an induction furnace for heating the steel strip to an intermediate temperature of between 400 to 600°C, and
B. a second heating unit (5) comprising one or more transversal induction furnaces for further heating the steel strip to an annealing temperature of between 500°C up to about 1000°C;
ii. a soaking step for soaking the steel strip for a period of at most 120 seconds;
iii. a cooling step (6) comprising a slow cooling zone, a fast cooling zone and a third cooling zone, wherein the slow cooling zone is for cooling the steel strip from the annealing temperature to the fast cooling start temperature and wherein the fast cooling zone is for quickly cooling the steel strip at a cooling rate of at least 50°C/s from the fast cooling start temperature to a cooling stop temperature of about 300°C and wherein the third cooling zone is for cooling the steel strip from the second cooling stop temperature to a temperature of between ambient temperature and 100°C;
c. an optional reheating zone (7)
d. an optional tailor annealing zone (8) for local heat treating one or more zones areas in the longitudinal direction of the strip
e. a final cooling zone (9)
f. a coating zone (10) comprising:
• optionally a pickling and/or activation step
• optionally a first cleaning step
• an electrolytic coating step
• optionally a second cleaning step
• optionally a drying step
g. a coiler for coiling the annealed strip material

2. Apparatus according to claim 1 wherein the heating zone comprises a first heating unit (4) comprising of radiant tube burners for heating the steel strip to a temperature of up to about 500°C.

3. Apparatus according to claim 2 wherein the second heating unit (5) comprises of a first transversal induction furnace for further heating the steel strip to a temperature of up to about 800°C and a second transversal indication furnace for further heating the steel strip to an annealing temperature of up to about 1000°C.

4. Apparatus according to any one of the preceding claims wherein the reheating zone (7,8) comprises a longitudinal induction furnace for reheating the steel strip to a temperature of between 350 and 550.

5. Apparatus according to claim 4 wherein the reheating zone (7,8) comprises a longitudinal induction furnace for reheating the steel strip to a temperature of between 400 and 500°C.

6. Apparatus according to any one of the preceding claims wherein the reheating zone (7,8) comprises a partial heating zone comprises a transversal induction furnace for uniformly or locally reheating the steel strip to a temperature of between 700 to 900°C, preferably 750 to 850°C.

7. Apparatus according to any one of the preceding claims wherein the apparatus comprises a tailor annealing zone (8) for local heat treating one or more areas in the longitudinal direction of the strip, and wherein said tailor annealing zone is preferably located behind the heating zone.

8. Apparatus according to any one of the preceding claims wherein galvanisation of the steel is performed in the electrolytic coating step (10).

9. Process for producing an AHSS using the device according to any one of claim 1 to 8 comprising the steps of:
a. uncoiling steel strip material (1) followed by
(i) heating the steel strip material in the first heating unit (4) comprising of radiant tube burners or an induction furnace to an intermediate temperature of between 400 to 600°C, and further heating the steel strip in the second heating unit (5) comprising one or more transversal induction furnaces to an annealing temperature of between 500°C up to about 1000°C;
(ii) soaking the steel strip for a period of at most 120 seconds;
(iii) slowly cooling the steel strip from the annealing temperature to the fast cooling start temperature in the slow cooling zone followed by quickly cooling the steel strip in the fast cooling zone at a cooling rate of at least 50°C/s from the fast cooling start temperature to a cooling stop temperature of about 300°C followed by cooling the steel strip in the third cooling zone from the cooling stop temperature of the fast cooling zone to a temperature of between ambient temperature and 100°C;
b. electrolytically coating the steel strip in a coating zone (10)
c. coiling the annealed strip material

10. Process according to claim 9 for producing a tailor annealed AHSS with varying properties over the width of the strip material by local heat treating one or more areas or zones in the longitudinal direction of the strip material.

11. Process according to claim 10 wherein the zones with the desired variations of the mechanical properties over the width of the strip material and parallel to the rolling direction are at least 50 mm wide.

12. Process according to any one of claims 9 to 11 wherein the fast cooling start temperature is just above Ar3.

13. Process according to any one of claims 9 to 11 wherein the steel strip material is a cold-rolled steel strip which is heated to an intermediate temperature of between 400 and 600°C in the first heating unit (4) and further heated to a temperature of between 600 and 700°C in the second heating unit (5), heat treated by soaking the steel strip material for 10 to 60 s followed by cooling to produce a recovery annealed cold-rolled high strength steel.

## Patentansprüche

1. Vorrichtung zum Erzeugen von geglühten Stählen, aufweisend:
a. eine Abwickelhaspel (12) zum Abwickeln von Bandstahlmaterial (1)
b. eine Aufheizzone (2), aufweisend:
i. einen Aufheizabschnitt, aufweisend:
A. eine erste Aufheizeinheit (4), bestehend aus Strahlrohrbrennern oder einem Induktionsofen zum Aufheizen des Bandstahls auf eine Zwischentemperatur zwischen 400 und 600 °C, und
B. eine zweite Aufheizeinheit (5), die einen oder mehrere transversale Induktionsöfen zum weiteren Aufheizen des Bandstahls auf eine Glühtemperatur zwischen 500 °C bis auf ungefähr 1000 °C aufweist;
ii. einen Halteschritt, um den Bandstahl für einen Zeitraum von maximal 120 Sekunden auf einer Temperatur zu halten;
iii. einen Abkühlungsschritt (6), aufweisend eine Zone für langsame Abkühlung, eine Zone für schnelle Abkühlung und eine dritte Abkühlungszone, wobei die Zone für langsame Abkühlung zum Abkühlen des Bandstahls von der Glühtemperatur auf die Anfangstemperatur der schnellen Abkühlung dient, und wobei die Zone für schnelle Abkühlung des Bandstahls mit einer Abkühlungsgeschwindigkeit von mindestens 50 °C/s ab der Anfangstemperatur der schnellen Abkühlung auf eine Abkühlungsstopp-Temperatur von ungefähr 300 °C dient, und wobei die dritte Abkühlungszone zum Abkühlen des Bandstahls von der zweiten Abkühlungsstopp-Temperatur auf eine Temperatur zwischen der Umgebungstemperatur und 100 °C dient;
c. eine optionale Zone zum erneuten Aufheizen (7)
d. eine optionale angepasste Glühzone (8) zur lokalen Wärmebehandlung von einem oder mehreren Zonenbereichen in Längsrichtung des Bands
e. eine abschließende Abkühlungszone (9)
f. eine Beschichtungszone (10), aufweisend:
• optional einen Beiz- und/oder Aktivierungsschritt
• optional einen ersten Reinigungsschritt
• einen Elektrolytische Beschichtungsschritt
• optional einen zweiten Reinigungsschritt
• optional einen Trocknungsschritt
g. eine Haspelanlage zum Aufwickeln des geglühten Bandmaterials.

2. Vorrichtung nach Anspruch 1, wobei die Aufheizzone eine erste Aufheizeinheit (4) aufweist, die aus Strahlrohrbrennern zum Aufheizen des Bandstahls auf eine Temperatur bis zu ungefähr 500 °C besteht.

3. Vorrichtung nach Anspruch 2, wobei die zweite Aufheizeinheit (5) aus einem ersten transversalen Induktionsofen zum weiteren Aufheizen des Bandstahls auf eine Temperatur bis zu ungefähr 800 °C und einem zweiten transversale Induktionsofen zum weiteren Aufheizen des Bandstahls auf eine Glühtemperatur von bis zu ungefähr 1000 °C besteht.

4. Vorrichtung nach einem der vorhergehenden Ansprüche, wobei die Zone zum erneuten Aufheizen (7, 8) einen Längs-Induktionsofen zum erneuten Aufheizen des Bandstahls auf eine Temperatur zwischen 350 und 550 °C aufweist.

5. Vorrichtung nach Anspruch 4, wobei die Zone zum erneuten Aufheizen (7, 8) einen Längs-Induktionsofen zum erneuten Aufheizen des Bandstahls auf eine Temperatur zwischen 400 und 500 °C aufweist.

6. Vorrichtung nach einem der vorhergehenden Ansprüche, wobei die Zone zum erneuten Aufheizen (7, 8) ein Zone zum teilweisen Aufheizen aufweist, die einen transversalen Induktionsofen zum gleichförmigen oder lokalen erneuten Aufheizen des Bandstahls auf eine Temperatur zwischen 700 bis 900 °C, bevorzugt 750 bis 850 °C aufweist.

7. Vorrichtung nach einem der vorhergehenden Ansprüche, wobei die Vorrichtung eine angepasste Glühzone (8) zur lokalen Wärmebehandlung von einem oder mehreren Bereichen in der Längsrichtung des Bands aufweist, und wobei die angepasste Glühzone sich bevorzugt hinter der Zone zum Aufheizen befindet.

8. Vorrichtung nach einem der vorhergehenden Ansprüche, wobei eine Galvanisierung des Stahls in dem Elektrolytische Beschichtungsschritt (10) ausgeführt wird.

9. Verfahren zum Erzeugen eines AHSS (Advanced High Strength Steel / hochfester Mehrphasenstahl) unter Verwendung der Vorrichtung gemäß einem der Ansprüche 1 bis 8, aufweisend die Schritte zum:
a. Abwickeln von Bandstahlmaterial (1), gefolgt von
(i) Aufheizen des Bandstahlmaterials in der ersten Aufheizeinheit (4), bestehend aus Strahlrohrbrennern oder einem Induktionsofen, auf eine Zwischentemperatur zwischen 400 und 600 °C, und ferner Aufheizen des Bandstahls in der zweiten Aufheizeinheit (5), bestehend aus einem oder mehreren transversalen Induktionsöfen, auf eine Glühtemperatur zwischen 500 °C bis auf ungefähr 1000 °C;
(ii) Halten des Bandstahls auf einer Temperatur für einen Zeitraum von maximal 120 Sekunden;
(iii) Langsamen Abkühlen des Bandstahls in der Zone für langsame Abkühlung von der Glühtemperatur auf die Anfangstemperatur der Schnellabkühlung, gefolgt vom schnellen Abkühlen des Bandstahls in der Zone für schnelle Abkühlung mit einer Abkühlungsgeschwindigkeit von mindestens 50 °C/s ab der Anfangstemperatur der schnellen Abkühlung auf eine Abkühlungsstopp-Temperatur von ungefähr 300 °C, gefolgt vom Abkühlen des Bandstahls in der dritten Abkühlungszone von der Abkühlungsstopp-Temperatur der Zone für schnelle Abkühlung auf eine Temperatur zwischen der Umgebungstemperatur und 100 °C;
b. Elektrolytisches beschichten des Bandstahls in einer Beschichtungszone (10)
c. Aufwickeln des geglühten Bandmaterials.

10. Verfahren nach Anspruch 9 zum Erzeugen eines angepassten geglühten AHSS mit unterschiedlichen Eigenschaften über die Breite des Bandmaterials durch lokale Wärmebehandlung von einem oder mehreren Bereichen oder Zonen in der Längsrichtung des Bandmaterials.

11. Verfahren nach Anspruch 10, wobei die Zonen mit den gewünschten Variationen der mechanischen Eigenschaften über die Breite des Bandmaterials und parallel zu der Walzrichtung mindestens 50 mm breit sind.

12. Verfahren nach einem der Ansprüche 9 bis 11, wobei die Anfangstemperatur der schnellen Abkühlung direkt über Ar3 liegt.

13. Verfahren nach einem der Ansprüche 9 bis 11, wobei das Bandstahlmaterial ein kaltgewalzter Bandstahl ist, der in der ersten Aufheizeinheit (4) auf eine Zwischentemperatur zwischen 400 und 600 °C aufgeheizt wird und ferner in der zweiten Aufheizeinheit (5) auf eine Temperatur zwischen 600 und 700 °C aufgeheizt wird, durch Halten der Temperatur des Bandstahlmaterials für die Dauer von 10 bis 60 Sekunden wärmebehandelt wird, gefolgt von Abkühlung, um einen erholungsgeglühten kaltgewalzten hochfesten Stahl zu erzeugen.

## Revendications

1. Appareil destiné à la production d'aciers recuits comprenant :
a. un dérouleur (12) permettant de dérouler le matériau de bande d'acier (1)
b. une zone de chauffage (2) comprenant :
i. une section de chauffage comprenant :
A. une première unité de chauffage (4) comprenant des brûleurs à tube radiant ou un four à induction pour le chauffage de la bande d'acier à une température intermédiaire comprise entre 400 et 600°C, et
B. une seconde unité de chauffage (5) comprenant un ou plusieurs fours à induction transversale pour chauffer davantage la bande d'acier à une température de recuit comprise entre 500°C et environ 1000°C ;
ii. une étape de trempage pour le trempage de la bande en acier pour une période inférieure ou égale à 120 secondes ;
iii. une étape de refroidissement (6) comprenant une zone de refroidissement lent, une zone de refroidissement rapide et une troisième zone de refroidissement, ladite zone de refroidissement lent étant destinée à refroidir la bande d'acier depuis la température de recuit jusqu'à une température de début de refroidissement rapide et ladite zone de refroidissement rapide étant destinée à refroidir rapidement la bande d'acier à une vitesse de refroidissement supérieure ou égale à 50°C/s depuis la température de début de refroidissement rapide jusqu'à une température d'arrêt de refroidissement d'environ 300°C et ladite troisième zone de refroidissement étant destinée à refroidir la bande d'acier depuis la seconde température d'arrêt de refroidissement jusqu'à une température comprise entre la température ambiante et 100°C ;
c. une zone de réchauffage optionnelle (7)
d. une zone de recuit sur mesure optionnelle (8) pour le traitement thermique local d'une ou de plusieurs surfaces de zones selon la direction longitudinale de la bande
e. une zone de refroidissement finale (9)
f. une zone de revêtement (10) comprenant :
• optionnellement une étape de décapage et/ou d'activation
• optionnellement une première étape de nettoyage
• une étape d'application de revêtement par voie électrolytique
• optionnellement une seconde étape de nettoyage
• optionnellement une étape de séchage
g. un enrouleur permettant l'enroulement du matériau de bande recuite.

2. Appareil selon la revendication 1, ladite zone de chauffage comprenant une première unité de chauffage (4) comprenant des brûleurs à tube radiant pour le chauffage de la bande d'acier à une température allant jusqu'à environ 500°C.

3. Appareil selon la revendication 2, la seconde unité de chauffage (5) comprenant un premier four à induction transversale pour chauffer davantage la bande d'acier à une température allant jusqu'à environ 800°C et un second four à induction transversale pour chauffer davantage la bande d'acier à une température de recuit allant jusqu'à environ 1000°C.

4. Appareil selon l'une quelconque des revendications précédentes, ladite zone de réchauffage (7, 8) comprenant un four à induction longitudinale pour le réchauffage de la bande d'acier à une température comprise entre 350 et 550.

5. Appareil selon la revendication 4, ladite zone de réchauffage (7, 8) comprenant un four à induction longitudinale pour le réchauffage de la bande d'acier à une température comprise entre 400 et 500°C.

6. Appareil selon l'une quelconque des revendications précédentes, ladite zone de réchauffage (7, 8) comprenant une zone de chauffage partielle comprenant un four à induction transversale pour réchauffer uniformément ou localement la bande d'acier à une température comprise entre 700 et 900°C, de préférence entre 750 et 850°C.

7. Appareil selon l'une quelconque des revendications précédentes, ledit appareil comprenant une zone de recuit sur mesure (8) pour un traitement thermique local d'une ou de plusieurs surfaces selon la direction longitudinale de la bande, et ladite zone de recuit sur mesure étant de préférence située derrière la zone de chauffage.

8. Appareil selon l'une quelconque des revendications précédentes, ladite galvanisation de l'acier étant effectuée lors de l'étape d'application de revêtement par voie électrolytique (10).

9. Procédé pour la production d'un acier avancé à haute résistance (AHSS) à l'aide du dispositif selon l'une quelconque des revendications 1 à 8 comprenant les étapes de :
a. déroulage d'un matériau de bande d'acier (1) suivi par
(i) le chauffage du matériau de bande d'acier dans la première unité de chauffage (4), comprenant des brûleurs à tube radiant ou un four à induction, à une température intermédiaire comprise entre 400 et 600°C et le chauffage supplémentaire de la bande d'acier dans la seconde unité de chauffage (5) qui comprend un ou plusieurs fours à induction transversale à une température de recuit comprise entre 500°C et environ 1000°C ;
(ii) le trempage de la bande d'acier pour une période inférieure ou égale à 120 secondes ;
(iii) le refroidissement lent de la bande d'acier depuis la température de recuit jusqu'à la température de début de refroidissement rapide dans la zone de refroidissement lent suivi par le refroidissement rapide de la bande d'acier dans la zone de refroidissement rapide à une vitesse de refroidissement supérieure ou égale à 50°C/s depuis la température de début de refroidissement rapide jusqu'à une température d'arrêt de refroidissement d'environ 300°C suivi par le refroidissement de la bande d'acier dans la troisième zone de refroidissement depuis la température d'arrêt de refroidissement de la zone de refroidissement rapide jusqu'à une température comprise entre la température ambiante et 100°C ;
b. application d'un revêtement par voie électrolytique sur la bande d'acier dans une zone de revêtement (10)
c. enroulage du matériau de bande recuite.

10. Procédé selon la revendication 9, pour la production d'un AHSS recuit sur mesure avec des propriétés variant sur la largeur du matériau de bande par un traitement thermique local d'une ou de plusieurs surfaces ou zones selon la direction longitudinale du matériau de bande.

11. Procédé selon la revendication 10, lesdites zones comprenant les variations souhaitées des propriétés mécaniques sur la largeur du matériau de bande et étant parallèles à la direction de laminage possédant une largeur inférieure ou égale à 50 mm.

12. Procédé selon l'une quelconque des revendications 9 à 11, ladite température de début de refroidissement rapide étant juste au-dessus de Ar3.

13. Procédé selon l'une quelconque des revendications 9 à 11, ledit matériau de bande d'acier étant une bande d'acier laminée à froid qui est chauffée à une température intermédiaire comprise entre 400 et 600°C dans la première unité de chauffage (4) et chauffée davantage à une température comprise entre 600 et 700°C dans la seconde unité de chauffage (5), traitée thermiquement en faisant tremper le matériau de bande d'acier pendant 10 à 60 s suivi par un refroidissement afin de produire un acier à haute résistance laminé à froid recuit de restauration.
